# EUROPÄISCHE PATENTSCHRIFT

(11) **EP 3 735 812 B1**
(45) Veröffentlichungstag und Bekanntmachung des Hinweises auf die Patenterteilung: **09.08.2023**
(21) Anmeldenummer: 19173748.5
(22) Anmeldetag: 10.05.2019
(51) Int. Cl.: A01B 73/04, A01D 78/10

(54) **ERNTEMASCHINE**
HARVESTER
MOISSONNEUSE

(43) Veröffentlichungstag der Anmeldung: 11.11.2020
(73) Patentinhaber: Kverneland Group Kerteminde AS, 5300 Kerteminde (DK)
(72) Erfinder: Gohl, Stefan, 78244 Gottmadingen (DE); Joos, Johann, 78244 Gottmadingen (DE)
(74) Vertreter: Grünecker Patent- und Rechtsanwälte PartG mbB

(56) Entgegenhaltungen:
- EP-A1- 0 463 323
- EP-A1- 0 772 962
- DE-A1- 19 618 839
- DE-A1-102016 114 767
- DE-C1- 3 926 381
- DE-U1- 20 011 449
- US-A1- 2013 312 383

## Beschreibung

Die Erfindung betrifft eine Erntemaschine gemäß Oberbegriff des Patentanspruchs 1.

Bei der gattungsgemäßen Erntemaschine gemäß DE-U1-200 11 449 ist der Kreisel beim Ausheben in die Vorgewendestellung um die quer zur Fahrtrichtung orientierte Pendelachse relativ zum Tragrahmen nach unten kippbar.

Bei der aus US 2013/0312383 A1 bzw. EP 2 675 266 B1 bekannten Erntemaschine ist in der kardanischen Aufhängung des Kreisels wenigstens ein Hydrozylinder verbaut, der über einen Hebelmechanismus die kardanische Aufhängung weitgehend blockiert, sobald der Kreisel aus der Arbeitsstellung in Richtung der Vorgewendestellung bzw. Transportstellung ausgehoben wird. In der Arbeitsstellung ist der Hydrozylinder in Schwimmstellung geschaltet, sodass der Kreisel zur Bodenanpassung um die Hubarmdrehachse und die Pendelachse begrenzt beweglich bleibt. Die Beweglichkeit des Kreisels um die Pendelachse erschwert jedoch die Ausrichtung des Kreisels in der Vorgewende- und der Transportstellung. Da der Kreisel in der Vorgewendestellung im Wesentlichen bodenparallel gehalten ist, besteht die Gefahr einer Kollision zwischen dem Gelenkwellenstrang und den Zinken tragenden Zinkenträgern, bzw. ist zwischen den Zinkenträgern und der Gelenkwelle ein Sicherheitsabstand erforderlich, der die Eingliederung des Gelenkwellenstranges komplex gestaltet. Für die Ansteuerung des Hydrozylinders ist eine exakte Abstimmung auf die Ansteuerung eines den Hubarm verschwenkenden Hydrozylinders erforderlich.

Bei einer aus DE 10 2016 114 767 A1 bekannten Erntemaschine ist in der Vorgewendestellung die zum Tragrahmen weisende innere Seite des Kreisels angehoben, während die Außenseite nach unten hängt und durch ein im Radträger von einer Feder absenkbares Tastrad ein bodenparalleles Aufsetzen der Kreisel ermöglicht.

Bei einer aus DE 19 618 839 A1 bekannten Erntemaschine sind bei der kardanischen Aufhängung Bewegungen des Kreisels um die Hubarmdrehachse und die von einem Kugelgelenk an der Hubarmdrehachse definierte Pendelachse begrenzende Hebelelemente verbaut. Beim Ausheben des Kreisels aus der Arbeitsstellung in Richtung zur Vorgewendestellung kippt der Kreisel im Kugelgelenk in eine durch eine Führungsrolle an einem Hebel und eine am Ende der Hubarmachse angeordnete Kulisse definierte Kippstellung, in der die in Fahrtrichtung vorneliegende Seite des Kreisels gegenüber der Hinterseite angehoben ist.

Der Erfindung liegt die Aufgabe zugrunde, eine Erntemaschine der eingangs genannten Art bezüglich der kardanischen Aufhängung des Kreisels baulich einfach und funktionssicher so zu gestalten, dass trotz einer baulich optimierten Eingliederung des Kreisel-Antriebs zwischen dem Tragrahmen und dem Kreisel ohne aufwendige Hilfsmittel Kollisionen zwischen Zinkenträgern und dem Antrieb vermieden werden.

Die gestellte Aufgabe wird mit den Merkmalen des Patentanspruchs 1 gelöst.

Da der mit dem Hubarm drehfest verbundene Drehzapfen aus der Relativbewegung des Hubarms beim Ausheben des Kreisels aus der Arbeitsstellung ein Drehmoment auf den Stellhebel überträgt, mit welchem dieser in Eingriff mit dem Anschlag am Lagergehäuse kommt, wird das Lagergehäuse und über dieses der Kreisel im vorderen Sektor nach unten bzw. in Transportstellung nach außen verlagert, sodass die Zinkenträger aus einer Kollisionsstellung zum Antrieb heraus verlagert werden. Da aufgrund dieser aus der Hubarmschwenkbewegung abgegriffenen Zwangsbewegung bis zur und zumindest in der Vorgewendestellung keine Kollisionsgefahr für den Antrieb, z. B. einen Gelenkwellenstrang, entstehen kann, braucht in diesem Bereich kein unnötig Bauraum beanspruchender Sicherheitsabstand vorgesehen zu werden. Somit kann der Gelenkwellenstrang optimal in die Erntemaschine eingegliedert werden.

Zweckmäßig weist, zumindest in der Arbeitsstellung, ein vertikaler Gewichtsvektor des Kreisels vom Kugelgelenk oder der Hubarmdrehachse, z. B. quer zur Fahrtrichtung, einen Abstand auf, aus dem bis zur und zumindest in der Vorgewendestellung ein Stellmoment generierbar ist, das den Stellhebel zum Angriff am Anschlag und das Lagergehäuse zur oberen Grenze beaufschlagt. Dieses Stellmoment assistiert sozusagen der Zwangsdrehbewegung, die vom Stellhebel auf den Anschlag des Lagergehäuses übertragen wird, und die kardanische Aufhängung bereits auf dem Schwenkweg zur Vorgewendestellung und in der Vorgewendestellung gegen unkontrollierbare Pendelbewegungen blockiert. Der Stellhebel kann als Winkelhebel ausgebildet sein.

In einer speziellen Ausführungsform ist mit dem Lagergehäuse ein in Richtung zum Tragrahmen frei auskragender Stützträger fest verbunden, der beim Ausheben des Kreisels zur Vorgewendestellung an ein tragrahmenfestes Widerlager anlegbar ist, wobei, vorzugsweise mit Anlage des Stützträgers am Widerlager das die kardanische Aufhängung blockierende Stellmoment steigerbar ist. Zumindest bis zur Vorgewendestellung hält der Kreisel selbsttätig stabil seine für den Gelenkwellenstrang optimale Relativposition, in der die kardanische Aufhängung so blockiert ist, dass keine nennenswerten Pendelbewegungen des Kreisels mehr möglich sind.

Ein weiter wichtiger Gesichtspunkt liegt darin, dass beim Absenken des Kreisels aus der Vorgewendestellung zur Arbeitsstellung der Stellhebel außer Eingriff vom Anschlag bringbar und das Lagergehäuse von der Gewichtskraft des Kreisels um die Pendelachse nur in Richtung zur unteren Grenze verlagerbar sind. Daraus resultiert eine Anhebebewegung des Bodenfahrwerks des Kreisels derart, dass die in Fahrtrichtung vorderen Räder gegenüber den in Fahrtrichtung hinteren Rädern angehoben werden, sodass der Kreisel mit den hinteren Rädern zuerst aufsetzt und sich erst dann an den Boden anpasst, wobei dem Kreisel dann auch Pendelbewegungen zwischen den unteren und oberen Grenzen möglich sind.

Zweckmäßig greift der Drehzapfen in eine langlochförmige Kulissenführung in einer Seitenwand des Lagergehäuses ein, vorzugsweise an der in Fahrtrichtung vorne liegenden Seitenwand des Lagergehäuses. Die Kulissenführung definiert in der Arbeitsstellung die oberen und unteren Grenzen für die Pendelbewegungen des Kreisels um die Pendelachse.

Um eine saubere Führung des Drehzapfens in der Kulissenführung des Lagergehäuses sicherzustellen, kann in diesem Bereich eine an die Weite der Kulissenführung angepasste Führungsbuchse auf dem Drehzapfen vorgesehen werden, die bei Pendelbewegungen sauber führt.

Das Kugelgelenk umfasst einen dort festgelegen oder angeformten sphärischen Innenring auf dem Drehzapfen, und einen im Lagergehäuse befestigten sphärischen Außenring, der, vorzugsweise, einstückig mit dem Lagergehäuse sein kann. Das Kugelgelenk fungiert weitestgehend spielfrei und ist im Lagergehäuse gegen Verschmutzungen abgeschirmt platziert.

Um zum Kippen des Lagergehäuses beim Ausheben des Kreisels aus der Arbeitsstellung große Kippkräfte auf das Lagergehäuse übertragen zu können, ist es zweckmäßig, wenn der Drehzapfen nicht nur einen Stellhebel, sondern zwei diametral gegenüberliegende Stellhebel trägt, für die am Lagergehäuse zwei auf die Stellhebel ausgerichtete Anschläge vorgesehen sind. Dadurch erfolgt auch eine in Bezug auf die Hubarmdrehachse symmetrische Kraftübertragung ohne exzentrische Kräfte auf das Lagergehäuse.

Da aufgrund der Kinematik beim Ausheben des Kreisels zu keiner Zeit Kollisionsgefahr mit dem Gelenkwellenstrang besteht, kann am Lagergehäuse direkt unterhalb der Kulissenführung und gegebenenfalls gegenüber dieser in Richtung zum Tragrahmen versetzt ein Gelenkwellen-Anschluss verbaut sein, an welchem der Gelenkwellenstrang anschließbar ist. Daraus resultiert eine kompakte Eingliederung des Gelenkwellenstrangs beispielsweise seitlich am Tragrahmen sowie eine optimale reduzierte Bauhöhe des Kreisels.

Zweckmäßig erstreckt sich der Drehzapfen in Fahrtrichtung aus dem Hubarm nach vorne oder hinten durch das Kugelgelenk und durch das Lagergehäuse und sogar bis über die Außenseite des Lagergehäuses hinaus.

Zweckmäßig kann am Drehzapfen oder am Stellhebel eine einstellbare, z. B. am Lagergehäuse verankerte Ausgleichsfeder angreifen, die beispielsweise in unterschiedlichen Abständen am Kreisel anzubringende Schwadtücher bezüglich deren Gewichtskräften kompensiert.

Schließlich ist es baulich einfach, wenn der Stützträger als U-Profil und das Widerlager als Stützrolle ausgebildet sind.

Anhand der Zeichnung wird eine Ausführungsform des Erfindungsgegenstandes erläutert. Es zeigen:
- Fig. 1: eine Perspektivdraufsicht einer hier als Doppelkreiselschwader ausgebildeten Erntemaschine in Arbeitsstellung der Kreisel,
- Fig. 2: die Erntemaschine von Fig. 1 in einer Vorgewendestellung, in der beide Kreisel aus der Arbeitsstellung ausgehoben sind,
- Fig. 3: eine Vorderansicht, entgegengesetzt zur Fahrtrichtung, eines Kreisels am Beginn des Aushebens aus der Arbeitsstellung,
- Fig. 4: eine Ansicht ähnlich der von Fig. 3,
- Fig. 5: eine Kreiselvorderansicht in Arbeitsstellung, und
- Fig. 6: eine Seitenansicht des Kreisels.

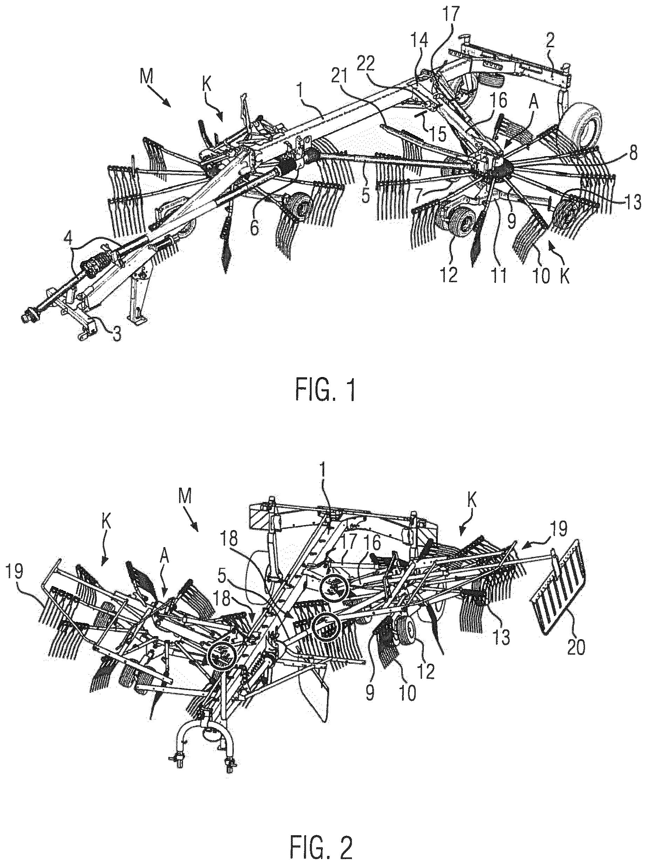

Fig. 1 zeigt am nicht beschränkenden Beispiel eines Doppelkreisel-Schwaders eine Erntemaschine M, beispielsweise zum Bilden von Schwaden gemähten Grases oder Heu. Ein in Fahrtrichtung orientierter Tragrahmen 1 weist am hinteren Ende ein Fahrwerk 2 und am vorderen Ende eine Koppelvorrichtung 3, beispielsweise zum Ankoppeln an eine Dreipunkt-Hebevorrichtung eines nicht gezeigten Schleppers, auf. Die Erntemaschine M weist an jeder Seite des Tragrahmens 1 einen Kreisel K auf. Jeder Kreisel ist durch einen Antrieb, hier einen Gelenkwellenstrang 5, drehantreibbar, der sich beispielsweise von einem Verteilergetriebe 6 an der Unterseite des Tragrahmens 1 zu einem Lagergehäuse 7 des Kreisels K erstreckt und sein Antriebsdrehmoment von einem Gelenkwellenabschnitt 4 erhält, der von der Zapfwelle des Schleppers angetrieben werden kann.

Das Lagergehäuse 7 jedes Kreisels K ist über eine kardanische Aufhängung A mit einem Ende eines Hubarms 16 verbunden, der seitlich am Tragrahmen 1 um eine annähernd bodenparallele und in Fahrtrichtung orientierte Tragrahmendrehachse 15 mittels eines Stelltriebs 17, z. B. einem Hydraulikzylinder, auf- und abschwenkbar ist.

Fig. 1 zeigt die Erntemaschine M in der Arbeitsstellung beider Kreisel K, in der diese mit Bodenlaufrädern 12, 13 auf dem Boden geschleppt werden und sich in der kardanischen Aufhängung A in allen Richtungen an Bodenunebenheiten anpassen. Jeder Hubarm 16 ist z. B. an einer am Tragrahmen 1 angeordneten Konsole 14 gelagert, an der auch der Stelltrieb 17 angreift, der sich zum außenliegenden Hubarmende erstreckt.

Optional ist in der in Fig. 1 gezeigten Ausführungsform am Lagergehäuse 7 des Kreisels K ein Stützträger 21 fest angebracht, der sich frei auskragend in Richtung zum Tragrahmen 1 erstreckt und auf ein tragrahmenfestes Widerlager 22, z. B. eine Stützrolle, ausgerichtet ist.

Mit dem Lagergehäuse 7 ist ein Rotor 8 fest verbunden, an welchem Zinken 10 tragende Zinkenträger 9, hier z. B. beim Umlauf gesteuert, bewegbar sind, wie die unterschiedlichen Schräglagen der Zinken 10 andeuten. Ferner ist am Rotor 8 ein Fahrwerk 11 des Kreisels befestigt, an welchem hier ein Paar vorderer Bodenlaufräder 12 sowie an seitlichen Auslegern zwei hintere, weiter außen platzierte Bodenlaufräder 13 angeordnet sind.

In der in Fig. 1 gezeigten Arbeitsstellung liegt zwischen dem Gelenkwellenstrang 5 und den Zinkenträgern 9 genügend Sicherheitsabstand vor, um trotz begrenzter Bodenanpassungsbewegungen des Kreisels K relativ zum Tragrahmen 1 Kollisionen auszuschließen, die den Gelenkwellenstrang 5 und/oder die Zinkenträger 9 beschädigen könnten. Der Stelltrieb 17 kann in der Arbeitsstellung in Schwimmstellung sein oder mit einem vorbestimmten Entlastungsdruck beaufschlagt werden.

Am Feldende (Vorgewende) oder um beim Überfahren bereits gebildeter Schwaden diese nicht wieder aufzulösen, werden die Kreisel gemäß Fig. 2 aus der Arbeitsstellung in eine Vorgewende-Stellung ausgehoben. Ferner sind beide Kreisel in der gezeigten Ausführungsform in eine hochgeklappte Transportstellung bringbar, in der die erforderlichen Transportabmessungen eingehalten werden. Die Transportstellung ist nicht gezeigt.

In der in Fig. 2 gezeigten Vorgewendestellung sind die Kreisel K nicht nur ausgehoben, sondern auch mit ihren zum Tragrahmen 1 weisenden inneren Seiten 18 abgesenkt, hingegen mit ihren außenliegenden Seiten 19 angehoben, sodass sie eine schräge Position im Raum stabil einhalten, in der, wie durch den mittleren Kreis in Fig. 2 hervorgehoben, der Gelenkwellenstrang 5 nach wie vor sicheren Abstand von den Zinkenträgern 9 hat. In Fig. 2 ist auch ein Schwadblech 20 (oder Schwadtuch) an einer Sicherheitsbügelkonstruktion des Kreisels angedeutet.

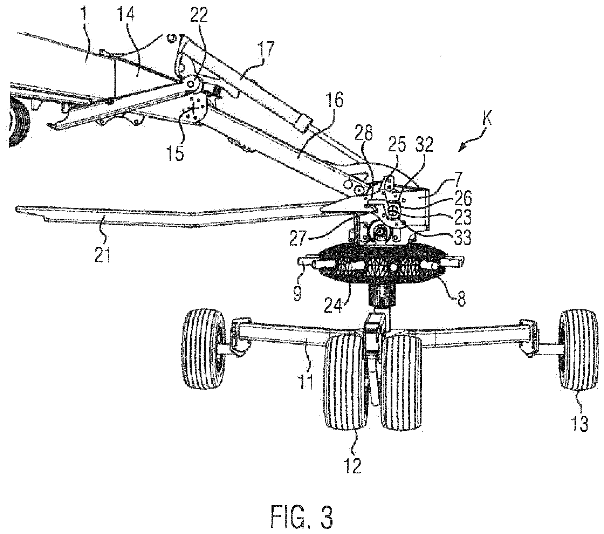

In Fig. 3 ist hervorgehoben, dass für das Lagergehäuse 7 des Kreisels K oberhalb eines Gelenkwellen-Anschlusses 24 des Lagergehäuses 7 eine zur Tragarmdrehachse 15 annähernd parallele Hubarmdrehachse 23 vorgesehen ist, die durch einen Drehzapfen 25 gebildet wird.. Um die Hubarmdrehachse 23 kann sich der Kreisel quer zur Fahrtrichtung an Bodenunebenheiten anpassen.

Der Drehzapfen 25 ist mit dem Ende des Hubarms 16 drehfest verbunden und trägt an seinem z. B. aus dem Lagergehäuse 7 in Fahrtrichtung nach vorne oder nach hinten vortretenden Ende drehfest einen Stellhebel 28, auf den ein am Lagergehäuse 7, z. B. an der in Fahrtrichtung vorderen Außenseite, fest angebrachter Anschlag 27 ausgerichtet ist. Der Stellhebel 28 kann ein Winkelhebel sein.

Obwohl Fig. 3 nur einen Stellhebel 28 und einen Anschlag 27 zeigt, könnte auf dem Drehzapfen 25 z. B. ein Paar diametral gegenüberliegender Stellhebel 28 für entsprechend platzierte Anschläge 27 am Lagergehäuse 7 vorgesehen sein.

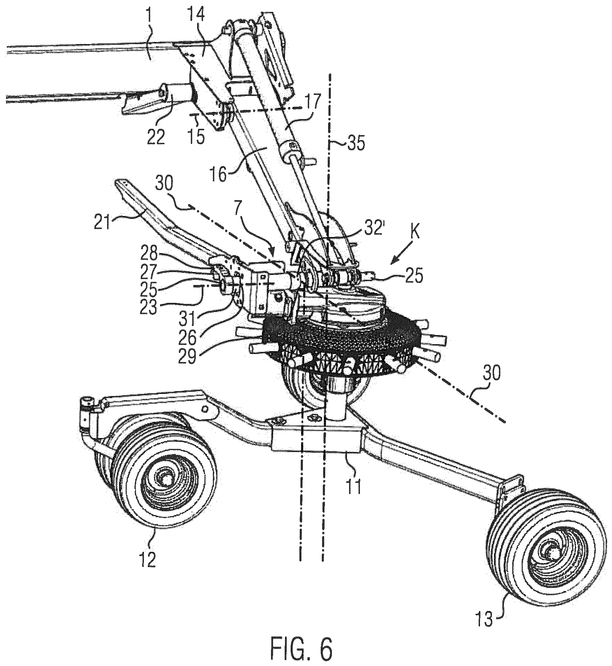

In der Seitenwand des Lagergehäuses 7 ist eine langlochförmige Kulissenführung 26 für den Drehzapfen 25 ausgeschnitten, um obere und untere Grenzen 32, 33 für Pendelbewegungen des Lagergehäuses 7 und damit des Kreisels K um eine in Fig. 6 gezeigte Pendelachse 30 eines Kugelgelenks 29 zu definieren.

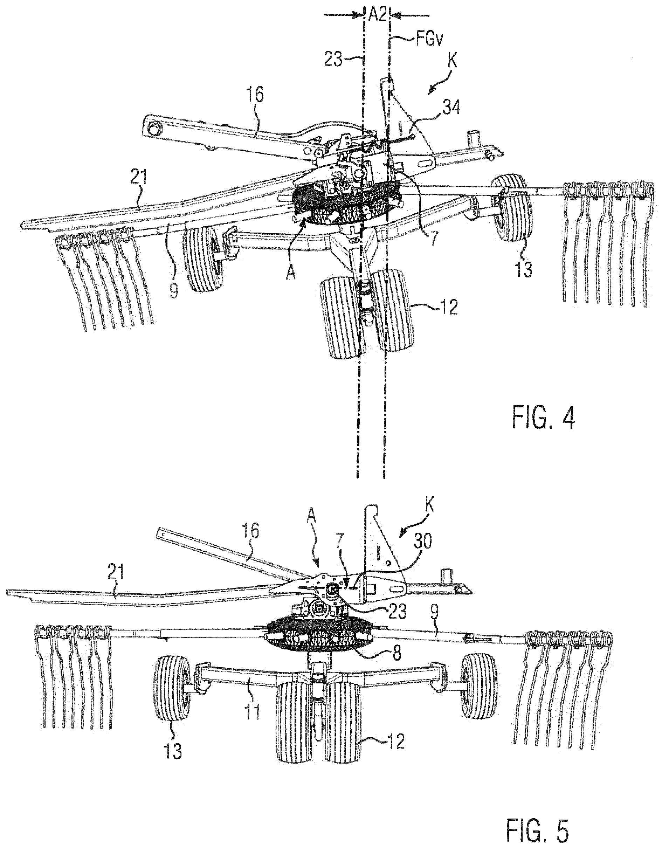

In Fig. 3 wird der Kreisel K aus der Arbeitsstellung ausgehoben, wobei bei der relativen Schwenkbewegung des Hubarms 16 gegenüber dem Kreisel K sich der Drehzapfen 25 entgegen dem Uhrzeigersinn verdreht und mit seinem Stellhebel 28 am Anschlag 27 anliegt und das Lagergehäuse 7 und damit den vorderen Sektor des Kreisel K in Fig. 4 um die Pendelachse 30 nach unten kippt, wobei sich der Drehzapfen 25 in der Kulissenführung 26 an die obere Grenze 32 hin bewegt, sodass in der Vorgewendestellung die in Fig. 2 gezeigte Schräglage des Kreisels K entsteht, in der die kardanische Aufhängung A bezüglich unkontrollierter Pendelbewegungen des Kreisels K blockiert ist.

Fig. 4 zeigt einen zum Erzeugen der Stellkraft eingesetzten vertikalen Gewichtskraftvektor FGv, der quer zur Fahrtrichtung einen Abstand A2 von der durch eine vertikale strichpunktierte Linie angedeuteten Position der Hubarmdrehachse 23 oder des Kugelgelenks 29 hat, wobei der Kreisel nach vorne unten und unten nach außen gekippt ist.

Fig. 5 zeigt den Kreisel in Arbeitsstellung, in der er sich um die Achsen 23 und 30 der kardanischen Aufhängung A an Bodenunebenheiten anpassen kann.

Wie Fig. 5 zeigt, erstreckt sich der die Hubarmdrehachse 23 definierende Drehzapfen 25 durch das Lagergehäuse 7 und durch das Kugelgelenk 29, das sich im Lagergehäuse 7 befindet und die Pendelachse 30 definiert, die die Hubarmdrehachse 23 senkrecht und in der gezeigten Stellung von Fig. 5 etwa bodenparallel kreuzt. Vom Kugelgelenk 29 erstreckt sich der Drehzapfen 25 hier weiter durch die Kulissenführung 26 zur Außenseite des Lagergehäuses 7, wo der Stellhebel 28 drehfest auf dem Drehzapfen 25 angebracht ist und mit dem Anschlag 27 zusammenwirken kann.

Das Kugelgelenk 29 weist z. B. einen in Fig. 5 angedeuteten Innenring 32` mit kugeliger Au-ßenoberfläche auf, der auf dem Drehzapfen 25 festgelegt oder angeformt sein kann und mit einem Außenring (nicht gezeigt) mit kugeliger Innenoberfläche zusammenwirkt, der im Lagergehäuse 7 befestigt oder dort einstückig ausgebildet ist, sodass das Lagergehäuse 7 um die Pendelachse 30 durch die oberen und unteren Grenzen 32, 33 der Kulissenführung 26 begrenzt pendeln kann, damit sich der Kreisel an Anstiege oder Gefälle des Bodens anzupassen vermag.

Fig. 6 deutet einen strichpunktierten vertikalen Gewichtskraftvektor 35 an, der z. B. durch den Schwerpunkt des Kreisels K verläuft, und von dem Kreuzungspunkt zwischen der Hubarmdrehachse 23 und der Pendelachse 30 quer zur Fahrtrichtung einen Abstand X hat. Aus diesem Abstand X resultiert eine Stellkraft, die beim Ausheben des Kreisels K aus der Arbeitsstellung das Lagergehäuse 7 an die obere Grenze 32 stellt, wobei der Drehzapfen 25 in der Kulissenführung 26 eine Führungsbüchse 31 trägt, die auf die Weite der Kulissenführung abgestimmt ist.

Beim Absenken des Kreisels aus der in Fig. 2 gezeigten Vorgewendestellung zur Arbeitsstellung bewirkt die aus dem Gewichtskraftvektor 35 abgeleitete Stellkraft, dass sich der Drehzapfen 25 in der Kulissenführung 26 des Lagergehäuses 7 in Richtung zur unteren Grenze 33 bewegt, d. h., die vorderen Bodenlaufräder 12 höher positioniert werden als die hinteren Bodenlaufräder 13, sodass der Kreisel K zuerst mit den hinteren Bodenlaufrädern 13 auf dem Boden aufsetzt und dann erst die vorderen Bodenlaufräder 12 auf den Boden gedrückt werden, wobei der Drehzapfen 25 das Spiel in Hochrichtung zwischen den oberen und unteren Grenzen 32, 33 nutzt. Beim Ausheben werden hingegen vor Erreichen der Vorgewendestellung, da der Drehzapfen 25 an die obere Grenze 32 in der Kulissenführung 26 stößt, die hinteren Bodenlaufräder 13 höher positioniert als die vorderen Bodenlaufräder 12, um genügend Abstand der Zinkenträger 9 zum Gelenkwellenstrang 5 sicherzustellen.

Beim weiteren Ausheben des Kreisels bis zur Vorgewendestellung gelangt schließlich der Stützträger 21 in Anlage an das Widerlager 22, wodurch der Kreisel nachdrücklich in die in Fig. 2 gezeigte Schräglage gebracht wird und um die Hubarmdrehachse 23 und die Pendelachse 30 so blockiert ist, dass der Kreisel K selbst bei fahrbedingten Erschütterungen keine unkontrollierten Pendelbewegungen auszuführen vermag, bei denen er dem Gelenkwellenstrang 5, oder der Konsole 14 mit den Zinkenträgern 9 nahekommen könnte.

Um zusätzliche Belastungen beispielsweise aus dem Schwadblech 20, wie in Fig. 2 gezeigt, abhängig von dessen Einstellung, kompensieren zu können, kann eine z. B. am Lagergehäuse 7 verankerte Ausgleichsfeder 34 (Fig. 4) z. B. am Hubarm 16 oder dem Stellhebel 28 angreifen.

## Patentansprüche

1. Erntemaschine (M), insbesondere Kreiselschwader, mit einem ein Fahrwerk (2) aufweisenden Tragrahmen (1), an welchem seitlich wenigstens ein quer zur Fahrtrichtung orientierter, mit einem Bodenlaufräder (12, 13) aufweisenden, über einen Antrieb (5) drehantreibbaren Kreisel (K) verbundenen Hubarm (16) um eine annähernd bodenparallele, in etwa in Fahrtrichtung orientierte Tragrahmenachse (15) zwischen einer abgesenkten Arbeitsstellung des Kreisels über eine ausgehobene Vorgewendestellung in eine Transportstellung verstellbar ist, wobei ein kreiselfestes Lagergehäuse (7) mit dem Hubarm (16) in einer kardanischen Aufhängung (A) verbunden ist, die eine annähernd in Fahrtrichtung orientierte Hubarmdrehachse (23) und eine die Hubarmdrehachse (23) in einem Kugelgelenk (29) im Wesentlichen senkrecht kreuzende Pendelachse (30) aufweist und das Lagergehäuse (7) zumindest um die Pendelachse (30) zwischen oberen und unteren Grenzen (32, 33) verstellbar ist, **dadurch gekennzeichnet, dass** die Hubarmdrehachse (23) ein mit dem Hubarm (16) drehfest verbundener Drehzapfen (25) ist, der drehfest wenigstens einen Stellhebel (28) trägt, der an einem am Lagergehäuse (7) angeordneten Anschlag (27) zum Angriff bringbar ist, derart, dass beim Ausheben des Kreisels (K) zumindest in die Vorgewendestellung der Kreisel (K) an seiner zum Tragrahmen (1) und Antrieb (5) weisenden inneren Seite (18) um die Pendelachse (30) relativ zum Tragrahmen (1) nach unten und das Lagergehäuse (7) zur oberen Grenze (32) kippbar sind, wobei der Drehzapfen (25) in eine langlochförmige Kulissenführung (26) in einer Seitenwand des Lagergehäuses (7) eingreift und sich bei relativer Schwenkbewegung des Hubarms (16) gegenüber dem Kreisel (K) entgegen dem Uhrzeigersinn verdreht und mit seinem Stellhebel (28) am Anschlag (27) anliegt, sodass das Lagergehäuse (7) und damit der vordere Sektor des Kreisels (K) um die Pendelachse (30) nach unten kippt und sich der Drehzapfen (25) in der Kulissenführung (26) an die obere Grenze (32) bewegt, sodass in der Vorgewendestellung eine Schräglage des Kreisels (K) entsteht, in der die kardanische Aufhängung (A) bezüglich unkontrollierter Pendelbewegungen des Kreisels (K) blockiert ist.

2. Erntemaschine nach Anspruch 1, **dadurch gekennzeichnet, dass** in der Arbeitsstellung ein vertikaler Gewichtsvektor (FGv) des Kreisels (K) vom Kugelgelenk (29) und/oder der Hubarmdrehachse (23) quer zur Fahrtrichtung einen Abstand (A2) aufweist, aus welchem bis zur und zumindest in der Vorgewendestellung ein Stellmoment generierbar ist, das den Anschlag (27) zum Angriff am Stellhebel (28) und das Lagergehäuse (7) zur oberen Grenze (32) beaufschlagt.

3. Erntemaschine nach wenigstens einem der vorhergehenden Ansprüche, **dadurch gekennzeichnet, dass** mit dem Lagergehäuse (7) ein in Richtung zum Tragrahmen (1) frei auskragender Stützträger (21) fest verbunden ist, der beim Ausheben des Kreisels (K) zumindest in die Vorgewendestellung an ein tragrahmenfestes Widerlager (22) anlegbar ist, wobei, vorzugsweise, mit Anlage des Stützträgers (21) am Widerlager (22) das Stellmoment zur Beaufschlagung des Lagergehäuses (7) zur oberen Grenze (32) hin steigerbar ist.

4. Erntemaschine nach Anspruch 1, **dadurch gekennzeichnet, dass** mit Absenken des Kreisels (K) aus der Vorgewendestellung zur Arbeitsstellung der, vorzugsweise abgewinkelte, Stellhebel (28) außer Eingriff vom Anschlag (27) bringbar und das Lagergehäuse (7) auch von der Gewichtskraft des Kreisels um die Pendelachse (30) in Richtung zur unteren Grenze (33) verlagerbar sind.

5. Erntemaschine nach wenigstens einem der vorhergehenden Ansprüche, **dadurch gekennzeichnet, dass** der Drehzapfen (25) in eine langlochförmige Kulissenführung (26) in einer Seitenwand des Lagergehäuses (7) eingreift, die die oberen und unteren Grenzen (32, 33) der Pendelbewegung des Kreisels (K) um die Pendelachse (30) definiert, und dass der Drehzapfen (25) in der Kulissenführung (26) eine an die Weite der Kulissenführung (26) angepasste Führungsbuchse (31) trägt.

6. Erntemaschine nach wenigstens einem der vorhergehenden Ansprüche, **dadurch gekennzeichnet, dass** das Kugelgelenk (29) einen sphärischen Innenring (32`) auf dem Drehzapfen (25) und einen im Lagergehäuse (7) befestigten, sphärischen Außenring, vorzugsweise einstückig mit dem Lagergehäuse (7), umfasst.

7. Erntemaschine nach wenigstens einem der vorhergehenden Ansprüche, **dadurch gekennzeichnet, dass** der Drehzapfen (25) an seinem aus dem Lagergehäuse (7) vorstehenden Ende zwei in etwas diametral gegenüberliegende Stellhebel (28) und das Lagergehäuse (7) an seiner dem Hubarm (16) abgewandten Außenseite und benachbart zur Kulissenführung (26) zwei auf die Stellhebel (28) ausgerichtete Anschläge (27) aufweist.

8. Erntemaschine nach wenigstens einem der vorhergehenden Ansprüche, **dadurch gekennzeichnet, dass** am Lagergehäuse (7) unterhalb der Kulissenführung (26) und gegenüber dieser in Richtung zum Tragrahmen (1) versetzt ein Gelenkwellen-Anschluss (24) verbaut ist.

9. Erntemaschine nach wenigstens einem der vorhergehenden Ansprüche, **dadurch gekennzeichnet, dass** sich der Drehzapfen (25) in Fahrtrichtung aus dem Hubarm (16) nach vorne oder nach hinten, durch das Lagergehäuse (7) erstreckt.

10. Erntemaschine nach wenigstens einem der vorhergehenden Ansprüche, **dadurch gekennzeichnet, dass** am Drehzapfen (25) und/oder Stellhebel (28) eine einstellbare Ausgleichsfeder (34) angreift, die am Lagergehäuse (7) fixiert ist.

11. Erntemaschine nach wenigstens einem der vorhergehenden Ansprüche, **dadurch gekennzeichnet, dass** der Stützträger (21) als U-Profil und das Widerlager (22) als Stützrolle ausgebildet sind.

## Claims

1. Harvester (M), in particular a rotary windrower, with a support frame (1) which has a running gear (2), on which laterally at least one lifting arm (16), which is oriented crosswise to the direction of travel and which is connected to a rotor device (K) which has ground running wheels (12, 13) and can be driven in a rotary manner via a drive (5), can be adjusted around a support frame axis (15) that is approximately parallel to the ground and oriented approximately in the direction of travel, between a lowered working position of the rotor device via a raised headland position into a transport position, wherein a bearing housing (7) fixed to the rotor device is connected to the lifting arm (16) in a cardan suspension (A) which has a lifting arm rotation axis (23) that is oriented approximately in the direction of travel and a swing axis (30) that crosses the lifting arm rotation axis (23) in a ball joint (29) in an essentially vertical manner, and the bearing housing (7) can be adjusted at least around the swing axis (30) between the upper and lower limits (32, 33), **characterised in that** the lifting arm rotation axis (23) is a pivot pin (25) which is non-rotatably connected to the lifting arm (16) and which in a non-rotatable manner bears at least one adjusting lever (28) that can be made to engage on a limit stop (27) that is arranged on the bearing housing (7), in such a way that when the rotor device (K) is raised at least into the headland position, at its inner side (18) pointing towards the support frame (1) and drive (5), the rotor device (K) can be tilted around the swing axis (30) downwards relative to the support frame (1) and the bearing housing (7) can be tilted towards the upper limit (32), wherein the pivot pin (25) engages into a slot-shaped link guide (26) in a side wall of the bearing housing (7) and turns anticlockwise when the lifting arm (16) pivots relative to the rotor device (K), and rests with its adjusting lever (28) against the limit stop (27), so that the bearing housing (7) and thus the front sector of the rotor device (K) tilts downwards around the swing axis (30) and the pivot pin (25) moves in the link guide (26) to the upper limit (32), so that the rotor device (K) is in an inclined position in the headland position, in which the cardan suspension (A) is blocked in respect of uncontrolled swinging movements of the rotor device (K).

2. Harvester according to claim 1, **characterised in that** in the working position, a vertical weight vector (FGv) of the rotor device (K) has a distance (A2) from the ball joint (29) and/or the lifting arm rotation axis (23) crosswise to the direction of travel, from which up to and at least in the headland position, a torque can be generated that pressurises the limit stop (27) to engage on the adjusting lever (28) and pressurises the bearing housing (7) towards the upper limit (32).

3. Harvester according to at least one of the preceding claims, **characterised in that** firmly connected to the bearing housing (7) is a support bracket (21) which overhangs freely towards the support frame (1) and which, when the rotor device (K) is raised, can be positioned at least into the headland position on a thrust bearing (22) fixed to the support frame, wherein preferably, with the support bracket (21) resting on the thrust bearing (22), the torque can be increased to pressurise the bearing housing (7) towards the upper limit (32).

4. Harvester according to claim 1, **characterised in that** as the rotor device (K) is lowered from the headland position to the working position, the preferably angled adjusting lever (28) can be disengaged from the limit stop (27) and the bearing housing (7) can also be displaced by the weight of the rotor device around the swing axis (30) towards the lower limit (33).

5. Harvester according to at least one of the preceding claims, **characterised in that** the pivot pin (25) engages into a slot-shaped link guide (26) in a side wall of the bearing housing (7), which defines the upper and lower limits (32, 33) of the swing of the rotor device (K) around the swing axis (30), and that the pivot pin (25) in the link guide (26) bears a guide bush (31) that is adapted to the width of the link guide (26).

6. Harvester according to at least one of the preceding claims, **characterised in that** the ball joint (29) comprises a spherical inner ring (32') on the pivot pin (25) and a spherical outer ring affixed in the bearing housing (7), preferably of one piece with the bearing housing (7).

7. Harvester according to at least one of the preceding claims, **characterised in that** at its end projecting out of the bearing housing (7), the pivot pin (25) has two somewhat diametrically opposed adjusting levers (28), and at its outer side facing away from the lifting arm (16) and adjacent to the link guide (26) the bearing housing (7) has two limit stops (27) oriented towards the adjusting lever (28).

8. Harvester according to at least one of the preceding claims, **characterised in that** a cardan shaft connection (24) is installed on the bearing housing (7) below the link guide (26) and offset relative to this in the direction of the support frame (1).

9. Harvester according to at least one of the preceding claims, **characterised in that** the pivot pin (25) extends forwards or backwards out of the lifting arm (16) in the direction of travel, through the bearing housing (7).

10. Harvester according to at least one of the preceding claims, **characterised in that** an adjustable compensating spring (34) that is affixed to the bearing housing (7) engages with the pivot pin (25) and/or adjusting lever (28).

11. Harvester according to at least one of the preceding claims, **characterised in that** the support bracket (21) is designed as a U-shaped profile and the thrust bearing (22) is designed as a support roller.

## Revendications

1. Moissonneuse (M), particulièrement andaineuse rotative, ayant un châssis de support (1) présentant un train de roulement (2), sur lequel est latéralement monté au moins un bras de traction orienté transversalement au sens de la marche et relié à un bras de relevage (16) disposant de roues au sol (12, 13), relié à une toupie (K) pouvant être mise en rotation par l'intermédiaire d'un entraînement (5), réglable autour d'un axe de cadre porteur (15) sensiblement parallèle au sol et orienté approximativement dans le sens de la marche, entre une position de travail abaissée de la toupie et une position de transport en passant par une position relevée en bout de champ, un logement de palier (7) solidaire de la toupie étant relié au bras de relevage (16) dans une suspension à cardan (A) qui présente un axe de rotation (23) du bras de relevage orienté approximativement dans le sens de la marche et un axe pendulaire (30) traversant sensiblement verticalement l'axe de rotation (23) du bras de relevage dans une articulation sphérique (29), et le logement de palier (7) étant déplaçable au moins autour de l'axe pendulaire (30) entre des limites supérieure et inférieure (32, 33), **caractérisé en ce que** l'axe de rotation du bras de relevage (23) est un pivot(25) solidaire en rotation du bras de relevage (16), qui porte solidairement en rotation au moins un levier de réglage (28) qui peut venir en prise avec une butée (27) disposée sur le logement de palier (7), de telle sorte que lors du soulèvement de la toupie (K) au moins dans la position de bout de champ, la toupie (K) peut être basculée vers le bas sur son côté intérieur (18) orienté vers le cadre porteur (1) et l'entraînement (5) autour de l'axe d'oscillation (30) par rapport au cadre porteur (1) et le logement de palier (7) peut être basculé vers la limite supérieure (32), le pivot (25) s'engageant dans un guidage à coulissement (26) en forme de trou oblong dans une paroi latérale du logement de palier (7) et tournant dans le sens inverse des aiguilles d'une montre lors du mouvement de pivotement relatif du bras de relevage (16) par rapport à la toupie (K) et s'appuyant avec son levier de réglage (28) contre la butée (27), de sorte que le logement de palier (7) et donc le secteur avant de la toupie (K) bascule vers le bas autour de l'axe d'oscillation (30) et que le pivot (25) se déplace dans le guidage à coulissement (26) jusqu'à la limite supérieure (32), de sorte qu'il résulte dans la position de bout de champ une position inclinée de la toupie (K) dans laquelle la suspension à cardan (A) est bloquée par rapport à des mouvements d'oscillation incontrôlés de la toupie (K).

2. Moissonneuse selon la revendication 1, **caractérisée en ce que,** dans la position de travail, un vecteur de poids vertical (FGv) de la toupie (K) présente, par rapport à l'articulation à rotule (29) et/ou à l'axe de rotation du bras de relevage (23), transversalement au sens de déplacement, une distance (A2) à partir de laquelle peut être généré, jusqu'à, et au moins dans, la position de bout de champ, un couple de réglage qui sollicite la butée (27) pour amener le levier de réglage (28) et le logement de palier (7) vers la limite supérieure (32).

3. Moissonneuse selon au moins l'une des revendications précédentes, **caractérisée en ce qu'**une poutre d'appui (21) en saillie libre en direction du châssis porteur (1) est reliée de manière fixe au logement de palier (7), qui, lors du relevage de la toupie (K), peut être appliqué au moins dans la position de bout de champ contre une butée (22) solidaire du châssis porteur, le couple de réglage pour la sollicitation du logement de palier (7) pouvant, de préférence, être approchée à la limite supérieure (32) avec l'application du support d'appui (21) contre la butée (22).

4. Moissonneuse selon la revendication 1, **caractérisée en ce qu'**avec l'abaissement de la toupie (K) de la position de bout de champ à la position de travail, le levier de réglage (28), de préférence coudé, peut être dégagé de la butée (27) et le logement de palier (7) peut également être déplacé par le poids de la toupie autour de l'axe d'oscillation (30) en direction de la limite inférieure (33).

5. Moissonneuse selon au moins l'une des revendications précédentes, **caractérisée en ce que** le pivot (25) s'engage dans un guidage à coulissement (26) en forme de trou allongé dans une paroi latérale du logement de palier (7), qui définit les limites supérieure et inférieure (32, 33) du mouvement pendulaire de la toupie (K) autour de l'axe pendulaire (30), et **en ce que** le pivot (25) porte dans le guidage à coulissement (26) une douille de guidage (31) adaptée à la largeur du guidage à coulissement (26).

6. Moissonneuse selon au moins l'une des revendications précédentes, **caractérisée en ce que** l'articulation à rotule (29) comprend une bague intérieure sphérique (32') sur le pivot (25) et une bague extérieure sphérique fixée dans le logement de palier (7), de préférence d'un seul tenant avec le logement de palier (7) .

7. Moissonneuse selon au moins l'une des revendications précédentes, **caractérisée en ce que** le pivot (25) présente, à son extrémité dépassant du logement de palier (7), deux leviers de réglage (28) légèrement diamétralement opposés et le logement de palier (7) présente, sur sa face extérieure opposée au bras de relevage (16) et au voisinage du guidage à coulissement (26), deux butées (27) orientées vers les leviers de réglage (28).

8. Moissonneuse selon au moins l'une des revendications précédentes, **caractérisée en ce qu'**un raccord d'arbre de transmission (24) est monté sur le logement de palier (7) en dessous du guidage à coulissement (26) et décalé par rapport à celui-ci en direction du châssis porteur (1).

9. Moissonneuse selon au moins l'une des revendications précédentes, **caractérisée en ce que** le pivot (25) s'étend vers l'avant ou vers l'arrière du bras de relevage (16) dans le sens de la marche, à travers le logement de palier (7).

10. Moissonneuse selon au moins l'une des revendications précédentes, **caractérisée en ce que** le pivot (25) et/ou le levier de réglage (28) est sollicité par un ressort d'équilibrage réglable (34) qui est fixé au logement de palier (7).

11. Moissonneuse selon au moins l'une des revendications précédentes, **caractérisée en ce que** la poutre de support (21) est un profilé en U et que la butée (22) est un rouleau de support.
